# DEMANDE DE BREVET EUROPEEN

(11) **EP 0 887 871 A1**
(43) Date de publication de la demande: **30.12.1998**
(21) Numéro de dépôt: 98401607.1
(22) Date de dépôt: 26.06.1998
(51) Int. Cl.: H01M 2/10, B60K 1/04

(54) **Support pour ensemble de batteries d'accumulateurs électriques pour véhicule automoteur**

(30) Priorité: 26.06.1997 FR 9708046
(71) Demandeur: OLDHAM FRANCE S.A., 62033 Arras Cedex (FR)
(72) Inventeur: Tourtois, Gabriel Jean-Marie, 62860 Ecourt Saint Quentin (FR); Collard, Dominique Omer, 62000 Arras (FR)
(74) Mandataire: Moncheny, Michel

(57) **Abrégé**

Ce support (10) pour ensemble de batteries (16) d'accumulateurs électriques pour véhicule automoteur comporte une colonne centrale (12) et une série de tablettes (14) montées sur ladite colonne (12) et destinées à recevoir chacune une batterie (16) d'accumulateurs.

## Description

La présente invention est relative à un support pour ensemble de batteries d'accumulateurs électriques pour véhicule, en particulier pour appareil de manutention ou pour véhicule automoteur électrique.

Le but de l'invention est de permettre des interventions rapides de maintenance des batteries.

Elle a donc pour objet un support pour ensemble de batteries d'accumulateurs électriques pour véhicule, comportant une colonne centrale et une série de tablettes montées sur ladite colonne et destinées à recevoir chacune une batterie d'accumulateurs, caractérisé en ce que ladite colonne centrale comporte une structure creuse et délimite intérieurement un logement de réception d'un chargeur pour lesdites batteries.

Le support selon l'invention peut en outre comporter une ou plusieurs des caractéristiques suivantes:
- chaque tablette est munie d'un logement de réception de batterie ;
- chaque tablette comporte une plaque de fond de support de batterie, deux parois latérales s'étendant parallèlement à partir de la colonne centrale, et un rebord frontal, lesdites parois délimitant avec ledit rebord et avec ladite colonne ledit logement de réception ;
- les parois latérales de chaque tablette comportent une première partie de hauteur constante s'étendant à partir de la colonne centrale et une deuxième partie de hauteur régulièrement décroissante s'étendant à partir de la première partie en direction du rebord ;
- la plaque de fond de chaque tablette située au dessus d'une tablette immédiatement inférieure est munie de perforations;
- elle est munie d'orifices disposés au voisinage desdites tablettes pour le passage de câbles d'alimentation et/ou de raccordement électrique desdites batteries ;
- ladite colonne est équipée d'un point de préhension destiné à coopérer avec un appareil de levage en vue du remplacement dudit ensemble de batteries.

D'autres caractéristiques et avantages ressortiront de la description suivante, donnée uniquement à titre d'exemple, et faite en référence aux dessins annexés sur lesquels :
- la figure 1 est une vue en perspective d'un support pour ensemble de batteries suivant l'invention; et
- la figure 2 est une vue en coupe longitudinale du support de la figure 1.

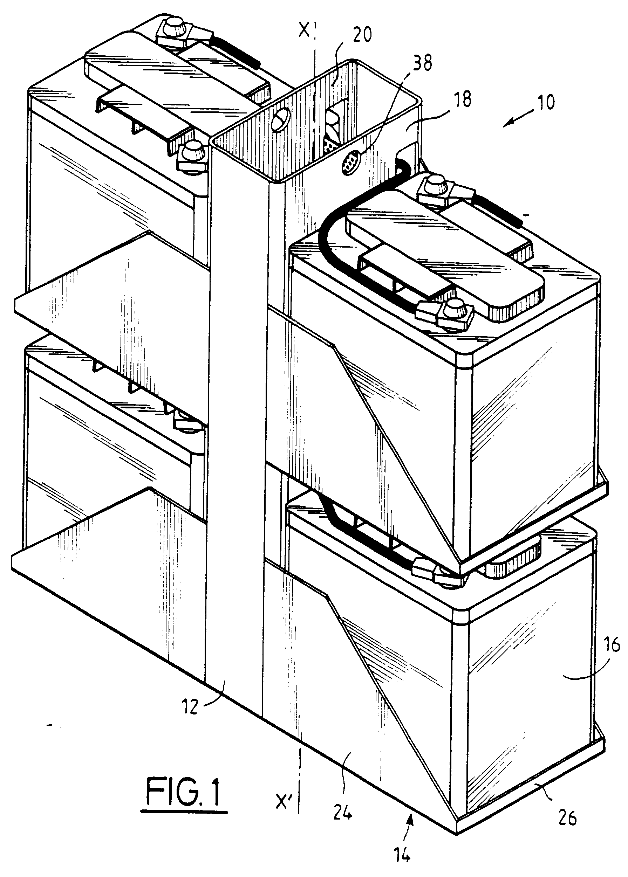

En référence à la figure 1, le support pour ensemble de batteries d'accumulateurs électriques, désigné par la référence numérique générale 10, comporte une colonne centrale 12 à laquelle sont fixées une série de tablettes, telles que 14, supportant chacune une batterie d'accumulateurs électriques, telle que 16, de type classique.

Le support 10 est destiné à être disposé dans un véhicule automoteur, tel qu'un engin de manutention ou un véhicule automoteur électrique, à un emplacement approprié.

La colonne 12, d'axe X-X' supposé vertical, comporte une paroi périphérique de section en coupe transversale de forme générale sensiblement rectangulaire et a une structure creuse.

On voit sur la figure 1 que les tablettes 14 sont fixées sur les deux grandes faces mutuellement opposées 18 et 20 de la colonne 12.

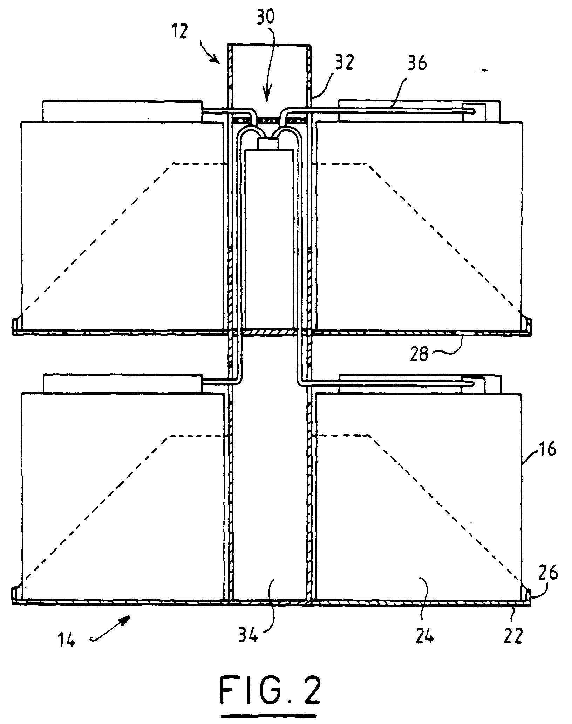

Chaque tablette 14 (figure 2) comporte une plaque de fond 22 destinée à supporter une batterie 16, deux parois latérales, telles que 24, et un rebord frontal 26, les parois latérales 24 et le rebord frontal 26 de chaque tablette délimitant avec la plaque de fond 22 et la grande face 18 correspondante de la colonne 12 un logement de réception d'une batterie d'accumulateurs 16 correspondante.

En outre, les parois latérales 24, qui s'étendent à partir de la colonne 12 en direction du rebord frontal 26 comportent une première partie de hauteur constante s'étendant à partir de la colonne 12 et une deuxième partie de hauteur linéairement décroissante s'étendant à partir de la première partie en direction du rebord 26.

On conçoit donc que les tablettes 24 ont une forme dégagée qui, tout en assurant un support et un maintien efficace des batteries 16, assurent une aération et une évacuation performante des calories.

La plaque de fond 26 de la tablette supérieure, ou des tablettes supérieures, c'est-à-dire de la ou des tablettes situées au dessus d'une tablette immédiatement inférieure est munie de perforations, telles que 28 permettant le passage d'une clef de serrage de moyens de fixation mécanique de connexions électriques équipant la batterie immédiatement inférieure.

La plus faible distance entre deux tablettes 14 situées l'une en dessous de l'autre est supérieure à la somme de la hauteur du rebord frontal 26 et de celle d'une batterie afin de permettre le remplacement des batteries.

On voit sur la figure 2 que la colonne 12 délimite intérieurement un logement 30 et comporte des orifices 32 aménagés dans la paroi constitutive de chacune des grandes faces 18 et 20 de la colonne 12, en regard des tablettes 24.

Le logement 30 est destiné à la réception d'un chargeur de batteries 34 raccordé, par l'intermédiaire de câbles d'alimentation 36 traversant les trous 32, aux batteries 16 en vue de leur recharge.

En outre, le support 10 est muni de câbles de raccordement électrique des batteries (non représentés), ces câbles de raccordement circulant à travers les orifices 32 et à l'intérieur de la colonne centrale 12.

On voit enfin sur la figure 1 que la colonne centrale 12 est équipée d'un point de préhension, constitué par l'association de deux orifices, tels que 38, destinés à coopérer avec un appareil de levage, en vue du remplacement du support.

Comme cela a été mentionné précédemment, le support qui vient d'être décrit est destiné à être disposé dans un emplacement approprié d'un véhicule automoteur et, en raison du poids des batteries qu'il supporte, est maintenu en place par gravité. Il constitue une source d'alimentation autonome et interchangeable.

En effet, dès qu'au moins une batterie est défectueuses, on réalise le remplacement de l'ensemble des batteries à l'aide d'un appareil de levage approprié coopérant avec le point de préhension prévu à la partie supérieure du support, le remplacement du ou des éléments de batteries défectueux étant ensuite réalisé dans un atelier de maintenance.

Les interventions effectuées au niveau du véhicule automoteur sont dès lors considérablement réduites.

## Revendications

1. Support pour ensemble de batteries d'accumulateurs électriques pour véhicule automoteur, comprenant une colonne centrale (12) et une série de tablettes (14) montées sur ladite colonne (12) et destinées chacune à recevoir une batterie (16) d'accumulateurs, caractérisé en ce que la colonne centrale (12) comporte une structure creuse et délimite intérieurement un logement (30) de réception d'un chargeur (34) pour lesdites batteries.

2. Support selon la revendication 1, caractérisé en ce que chaque tablette est munie d'un logement de réception de batterie (16).

3. Support selon la revendication 2, caractérisé en ce que chaque tablette (14) comporte une plaque de fond (22) de support de batterie (16), deux parois latérales (24) s'étendant parallèlement à partir de la colonne centrale (12) et un rebord frontal (26), lesdites parois délimitant avec le rebord (26) et avec ladite colonne (12) ledit logement de réception.

4. Support selon la revendication 3, caractérisé en ce que les parois latérales (24) de chaque tablette (14) comportent une première partie de hauteur constante s'étendant à partir de la colonne centrale (12) et une deuxième partie de hauteur régulièrement décroissante s'étendant à partir de la première partie en direction du rebord frontal (26).

5. Support selon la revendication 3, caractérisé en ce que la plaque de fond (22) de chaque tablette (14) située au dessus d'une tablette immédiatement inférieure est munie de perforations (28).

6. Support selon l'une quelconque des revendications 1 à 5, caractérisé en ce que ladite colonne est munie d'orifices (32) disposés au voisinage desdites tablettes pour le passage de câbles d'alimentation (36) et/ou de raccordement électrique des batteries.

7. Support selon l'une quelconque des revendications 1 à 6, caractérisé en ce que ladite colonne (12) est équipée d'un point de préhension (38) destiné à coopérer avec un appareil de levage en vue du remplacement dudit ensemble de batteries (16).
